# EUROPÄISCHE PATENTSCHRIFT

(11) **EP 2 523 791 B1**
(45) Veröffentlichungstag und Bekanntmachung des Hinweises auf die Patenterteilung: **24.09.2014**
(21) Anmeldenummer: 11701866.3
(22) Anmeldetag: 06.01.2011
(51) Int. Cl.: B29C 44/46, B29C 44/56, B29C 31/04, B29C 59/10, B29C 59/14

(54) **VERFAHREN UND VORRICHTUNG ZUM HERSTELLEN VON POLYMERKASCHIERUNGEN ODER STRANGFÖRMIGEN AUFTRÄGEN AN EINEM SUBSTRAT**
METHOD AND DEVICE FOR PRODUCING POLYMER LAMINATIONS OR STRAND-SHAPED APPLICATIONS ON A SUBSTRATE
PROCÉDÉ ET DISPOSITIF DE PRODUCTION DE PLACAGES POLYMÈRES OU D'APPLICATIONS EN FORME DE BOYAU SUR UN SUBSTRAT

(30) Priorität: 15.01.2010 DE 102010000088
(43) Veröffentlichungstag der Anmeldung: 21.11.2012
(73) Patentinhaber: Sonderhoff Chemicals GmbH, 50829 Köln (DE)
(72) Erfinder: LINK, Alfred, 50259 Pulheim (DE); MORHENN, Stephan, 47829 Krefeld (DE)
(74) Vertreter: Hennicke, Ernst Rüdiger
(86) Internationale Anmeldenummer: PCT/IB2011/050050
(87) Internationale Veröffentlichungsnummer: WO 2011/086478

(56) Entgegenhaltungen:
- WO-A2-2009/106289
- DE-A1- 3 322 190
- DE-A1- 19 727 129
- DE-B3- 10 331 487
- US-A- 3 832 260
- US-A1- 2005 042 436
- US-A1- 2008 311 378
- US-B2- 6 743 483

## Beschreibung

Die Erfindung betrifft ein Verfahren zum Herstellen von Polymerkaschierungen oder strangförmigen Aufträgen an einem Substrat, beispielsweise zur Herstellung von FIPFG-Dichtungen, bei dem ein reaktives, aufschäumenden Polymermaterial auf dem Substrat aufgetragen wird. Die Erfindung ist außerdem auf eine Vorrichtung zum Herstellen von Polymerkaschierungen oder strangförmigen Aufträgen an einem Substrat gerichtet, beispielsweise zur Herstellung von FIPFG-Dichtungen, mit einer Dosiereinrichtung für das zu applizierende Polymermaterial, die mit einem relativ zu dem Substrat verfahrbaren Applikator ausgerüstet ist.

Die Verarbeitung von reaktiven Polymermaterialien ist in der industriellen Technik für viele Anwendungsbereiche seit vielen Jahren etabliert. Zu diesen Materialien zählen beispielsweise Epoxidharze, Polyurethaneoder silikone. Anders als bei der Verarbeitung von thermoplastischen Materialien ermöglichen es reaktive Polymermaterialien, den Formgebungsprozess mit einer chemischen Vernetzung zu kombinieren. Man erhält hierdurch temperaturstabile Formkörper (Duroplaste), was mit rein thermoplastischen Materialien nicht möglich ist.

Oft werden die reaktiven Polymermaterialien in Formen oder aber durch Gießen an Ort und Stelle verarbeitet. Beispiele hierfür sind die Herstellung von Autositzen (Formschaumprozess) oder das Vergießen von elektronischen Bauteilen mit Epoxidharzen.

In den letzten 20 Jahren hat sich für die Abdichtung von Gehäuseteilen, Lampen oder Verpackungsdeckeln eine Technik etabliert, die auch als FIPFG (Formed in Place Foam Gasket) bezeichnet wird. Dabei kommen bestimmte Varianten von reaktiven Polymermaterialien zum Einsatz, die im Bereich der herzustellenden Dichtung unmittelbar auf dem jeweiligen Bauteil aufgetragen werden. Sie härten dann am Ort Ihres Einsatzes aus und zeigen zusätzlich einen Schäumungseffekt. Im Ergebnis erhält man typischerweise einen strangförmigen Schaumkörper, der eine an Ort und Stelle hergestellte Dichtungsschnur darstellt. Typische Werkstoffe hierfür sind Polyurethane und Silikone, die in den meisten Fällen als 2-Komponenten -Systeme realisiert werden. Bei diesen Verfahren wird ein Gemisch der zwei Komponenten mit Hilfe einer geeigneten Austragsdüse in kontrollierter Ausbringmenge mit kontrollierter Austragsgeschwindigkeit auf das abzudichtende Bauteil aufgetragen. In den meisten Fällen geschieht dies formlos, d.h. die Dichtungsspur oder die Höhe der Dichtung wird nicht durch ein danach aufgesetztes Gegenstück festgelegt, sondern sie ergibt sich als Resultat eines freien Aufschäumens. Neben Dichtungen werden auf ähnliche Weise mitunter auch flächige Kaschierungen an Bauteilen durch Auftrag von aufschäumendem Polymermaterial mit Hilfe von geeigneten Auftragsdüsen hergestellt, die den zu kaschierenden Bereich des Bauteils - beispielsweise einer Motorhaube - überfahren und dabei den Polymerwerkstoff auf die zu beschichtende Fläche auftragen.

Im Gegensatz zu Formschäumprozessen, in denen durch Anpassung der Temperatur der Form die Reaktion/Aushärtung des reaktiven Polymermaterialsystems beschleunigt werden kann, ist in dem beschriebenen, häufigen Fall der formlosen Applikation des reaktiven Polymermaterials zur Kaschierung eines Bauteils bzw. den Auftrag eines Dichtungsstrangs eine Beschleunigung der Reaktion und Aushärtung nur durch großen Aufwand möglich, indem man das Bauteil z.B. in einem Ofen erwärmt oder mittels Mikrowellen behandelt. 2-komponentige Polyurethan (PU) schaumsysteme, 1-komponentige PU-Schaumsysteme, 1-komponentige Silikonschaumsysteme, vor allem jedoch 2-komponentige silikonschaumsysteme zeigen nach ihrem Auftrag auf Industriebauteilen häufig ein relativ langsames Ausreaktionsverhalten. Dies erfordert es, insbesondere 2-komponentige Silikonschaumsysteme nach der Aufbringung fast grundsätzlich mit Hilfe eines Ofens nachzubehandeln, um einerseits die Oberfläche des entstehenden Dichtungsachaumes klebfrei zu machen und zum anderen die Dauergebrauchseigenschaften (Rückstellfähigkeit) herzustellen, die sich ohne die Anwendung einer Wärmebehandlung nicht vollständig eingestellt hätten.

Naturgemäß sind solchen Nachbehandlungsmethoden aber durch die Größe des Bauteils Grenzen gesetzt, auch muss beim Überführen eines Bauteils in einen Wärme- oder Mikrowellenofen immer sehr sorgfältig darauf geachtet werden, dass das frisch aufgetragene, noch weiche bis flüssige Polymermaterial nicht beschädigt wird.

Ohne Nachbehandlung im Ofen oder Mikrowsllengerät lassen sich also mit dem bekannten Verfahren und den dabei zum Einsatz kommenden Vorrichtungen und Materialien Dichtungen und Kaschierungen zwar in reprcduzierbarer Qualität herstellen, je nach Art des dabei eingesetzten Polymermaterials ist aber die Zeit, die das aufgetragene Material zum Ausreagieren benötigt, verhältnismäßig lang mit der oft nachteiligen Folge, dass die Bauteile nach dem Auftrag des Dichtungs- bzw.- Kaschierwerkstoffes erst eine Weile gelagert werden müssen, bevcr sie ihrem bestimmungsgemäßen Gebrauch zugeführt, beispielsweise in ein Automobil eingebaut werden können. Bei Verwendung von manchen werkstoffen lassen sich die gewünschten Produkteigenschaften ohne thermische Nachbehandlung im Ofen wie erläutert nicht im gewünschten Maße erreichen. Bei der Lagerung muss sorgfältig darauf geachtet werden, dass das aufgetragene Polymermaterial nicht eingedrückt oder sonst wie beschädigt wird, wodurch die Dichtung oder Kaschierung unbrauchbar oder jedenfalls nicht mängelfrei sein würde.

Aus der US 3,832,260 A ist ein verfahren bekannt, bei dem ein reaktives, aufschäumendes Polymermaterial auf einem Substrat aufgetragen wird, das dann anschließend einer Behandlung mit Heizelementen unterzogen wird. Dabei kann es zum Schrumpfen des zuvor aufgetragenen Schaummaterials kommen. Aus der DE 103 31 487 B3 ist ein gattungsähnliches Verfahren bekannt, bei dem das Substrat vor dem Auftrag des schaumbildenden Materials eine Oberflächenbehandlung erfährt. Aus der US 2006/311,378 A1 ist ein Verfahren zur Herstellung eines Polymerschaumverbunds bekannt, bei dem der Polymerschaumverbund einer Coronabehandlung unterworfen werden kann. Dabei stellt die Coronabehandlung eine Nachbehandlung dar, die erst dann stattfindet, wenn der Schaum auareagiert und/oder abgekühlt hat. Bei dem bekannten Verfahren wird also eine reaktive Mischung eines aufschäumenden Polymermaterials an einem Substrat aufgetragen, um an diesem dann auszuhärten oder abzukühlen (im Falle von thermoplastischem Material). Erst nach dem Aushärten und/oder Abkühlen wird das Polymermaterial der Nachbehandlung, beispielsweise einer Coronabehandlung, unterworfen, wobei diese Nachbehandlung dazu dient, eine äußere Schicht des ausgehärteten oder abgekühlten Schaums abzutragen.

Aufgabe der Erfindung ist es, ein Verfahren und eine Vorrichtung der eingangs genannten Art zu schaffen, womit es möglich ist, die mit aufschäumendem Polymermaterial zur Bildung einer Dichtung oder sonstigen Kaschierung versehenen Bauteile nach kürzerer Zeit weiter verwenden zu können.

Diese Aufgabe wird verfahrensgemäß dadurch gelöst, dass das Polymermaterial unmittelbar nach seinem Auftrag auf dem Substrat einer Corona- oder Plasmabehandlung unterworfen wird. Die erfindungsgemäße Vorrichtung ist dementsprechend dadurch gekennzeichnet, dass sie mindestens einen dem Applikator nachfolgend verfahrbaren PlasmaErzeuger aufweist.

Es hat sich überraschenderweise gezeigt, dass durch Anwendung von den ansonsten zur Vorbahandlung von Oberflächen vor deren Beschichtung oder dergleichen eingesetzten Plasma- oder Coronabehandlungsverfahren auf das bereits aufgetragene Polymermaterial dessen Ausreagieren/Aushärten erheblich beschleunigt werden kann, so dass man auf kontensparende und effiziente Weise eine Ausreaktion von reaktiven Polymermaterialien nach erfolgtem Auftrag schnell erreicht. Die reaktiven Polymermaterialien, insbesondere schäumende reaktive Polymermaterialien, werden, nachdem sie linienförmig oder flächig auf dem Bauteil aufgetragen oder in anderen formgebenden Prozessen aufgebracht worden sind, durch mittels eines Plasmaerzeugers oder eines Coronaentladungsgeräts überstrichen und dadurch der Plasma- bzw. Coronabehandlung unterworfen, wodurch sie zu einer beschleunigten und annähernd vollständigen Aushärtung innerhalb einer Zeit gebracht werden können, die im Vergleich zur Aushärtezeit ohne Nachbehandlung erheblich kürzer ist. Einen besonderen Vorteil bietet das erfindungsgemäße Verfahren bei der Ver- bzw. Bearbeitung von temperatursensitiven Bauteilen (Substraten), an denen nur eine geringe Menge des Polyurethanmaterials aufgetragen wird, das mit dem Plasmaerzeuger oder Coronaentladungsgerät bei Bedarf auch punkt- oder liniengenau behandelt werden kann. Das Substrat selbst bleibt von der Behandlung dann im Wesentlichen unbeeinflusst und wird insbesondere keinen thermischen Einflüssen unterworfen.

Wie bereits angedeutet, kann das Polyurethanmaterial ein 1- oder 2-komponentiges Polyurethanschaummaterial oder auch ein 1 - oder 2komponentiges Silikonschaummaterial sein. Als besonders geeignet für den Einsatz im erfindungsgemäßen Verfahren hat sich als Polymermaterial ein 2-komponentiges, nach dem Additionsvernetzungsprinzip vorzugsweise bei Raumtemperatur vernetzendes Silikonschaummaterial erwiesen.

In vorteilhafter Weiterbildung des erfindungsgemäßen Verfahrens wird das Polymermaterial nach seiner Applikation einer Behandlung mit einem Atmosphären-Plasma-Erzeuger unterworfen, wobei die Plasmadüse des Plasma-Erzeugers das applizierte Polymermaterial vorzugsweise in einem Abstand von 1 bis 10 mm, weiter vorzugsweise 3 bis 6 mm, insbesondere etwa 4 mm zur Materialoberfläche überstreicht. Versuche haben weiter gezeigt, dass man ein besonders gutes Ergebnis erhält, wenn die Plasmadüse relativ zum applizierten Polymermaterial mit einer Geschwindigkeit von 0,3 bis 25 m/min, vorzugsweise zwischen 0,5 und 15 m/min bewegt wird. Natürlich hängen die optimale Geschwindigkeit und der Abstand der Plasmadüse vom Polymermaterial von der Leistung und der Art/Konfiguration des eingesetzten Plasmaerzeugers ab. In jedem Fall ist es besonders vorteilhaft, wenn die Relativgeschwindigkeit zwischen dem Plasmaerzeuger und dem zuvor Mittels einer Auftragsdüse oder dergleichen am Substrat aufgetragenen Polymermaterial an die Relativgeschwindigkeit zwischen Auftragsdüse und Substrat angepasst ist, der Plasmaerzeuger also mit derselben Geschwindigkeit relativ zum Substrat bzw. dem darauf aufgetragenen Polymermaterial bewegt wird wie zuvor die Auftragsdüse, mit der das Polymermaterial auf dem Substrat aufgetragen wurde. Man erreicht so bei den beiden Verfahrensschritten eine Übereinstimmung in der Taktzeit, was insbesondere bei automatisierter Durchführung des Verfahrens erstrebenswert ist.

In Weiterbildung der zur Durchführung des erfindungsgemäßen Verfahrens besonders geeigneten Vorrichtung kann der Plasma-Erzeuger so relativ zum Applikator angeordnet sein, dass sich seine Plasmadüse oberhalb des vom Applikator zuvor auf dem Substrat aufgetragenen Polymermaterials befindet. Plasma-Erzeuger und Applikator können an einem gemeinsamen Halter so montiert sein, dass der Plasma-Erzeuger in einem kurzen Abstand von beispielsweise nur wenigen Zentimetern im Nachlauf zum Applikator genau denselben Weg nachfährt wie dieser und dabei den unmittelbar zuvor aufgetragen, dann unterhalb der Plasmadüse in deren Wirkungsbereich liegenden Polymermaterialstrang nachbehandelt. Natürlich kann - insbesondere bei komplizierten Verläufen der zu erzeugenden Dichtungen - der Plasma-Erzeuger auch an einem vom Applikator separaten Handhabungsgerät, insbesondere einem Roboter, oberhalb des Materialstrangs über das Bauteil bewegbar sein.

Um die Vorrichtung optimal an die wechselnden Bedingungen anpassen zu können, die vor allem durch unterschiedlichen, mit der Vorrichtung behandelbaren Werkstoffe bestimmt werden, ist es vorteilhaft, wenn der Abstand der Plasmadüse vom Applikator und/oder vom Substrat oder dem darauf aufgetragenen Polymermaterial einstellbar ist,

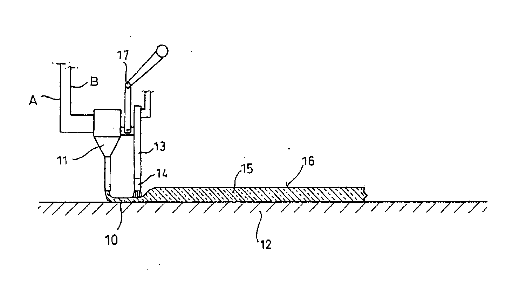

Weitere Merkmale und Vorteile der Erfindung ergeben sich aus der nachfolgenden Beschreibung und der Zeichnung, worin eine bevorzugte Ausführungsform der Erfindung anhand eines Beispiels näher erläutert wird.

Die Figur zeigt schematisch vereinfacht in einer Seitenansicht die Auswirkung einer erfindungsgemäßen Plasmabehandling auf einen zuvor auf einem Bauteil aufgetragenen Dichtungsstrang.

Bei dem bevorzugten Ausführungsbeispiel kommt ein marktübliches, zweikomponentiges Silikonschaumsystem 10 zum Einsatz, wie es für die Herstellung von Schaumdichtungen für Gehäuse, Verpackungsdeckel etc. bekannt ist. Ein Beispiel für derartige Silikonschaumsysteme ist das Produkt FERMASIL der Anmelderin, dessen Komponenten FERMASIL A-47-14 und FERMASIL B-47-14 im Allgemeinen im Mischungsverhältnis von 1:1 verarbeitet werden. Es handelt sich bei diesem Material um ein Silikonschaumsystem, welches nach dem Additionsvernetzungsprinzip arbeitet. Erfindungsgemäß werden die Komponenten A, B dieses Materials im gewünschten Mischungsverhältnis 1:1 mit Hilfe einer marktüblichen Misch- und Dosieranlage, z.B. des Typs DM 403 der Firma Sonderhoff Engineering GmbH, in einem Mischkopf 11 vermischt und auf ein beliebiges Substrat 12 aufgebracht.

Unmittelbar im Anschluss an den Auftrag des Materials 10 wird dieses mit einem Atmosphären-Plasma-Erzeuger 13 überfahren. Bei dem Plasma-Erzeuger kann es sich beispielsweise um ein Gerät der Firma Plasmatreat (früher: Agrodyn), z.B. das Modell FG1001, BJ 2001, oder das Modell FG 5002 S handeln, das mit einer Rotations(plasma)düse 14 versehen ist. Bei einer Verfahrgeschwindigkeit des Plasma-Erzeugers 12 von V = 0,5-1 m/min und einem Abstand der Plasmadüse 14 zur Materialoberfläche von ca. 4 mm expandiert das 2-komponentige Silikon-Dichtungsmaterial sofort bis zur Endhöhe der erzeugten Dichtung 15 und die Oberfläche 16 der Dichtung 15 ist schon ca. 5 sek. nach der Plasmabehandlung klebfrei.

Darüber hinaus zeigt das Material nach dieser Behandlung ein deutlich verbessertes Rückstellvermögen nach einem üblichen Test des sogenannten Druckverformungsrestes gemäß DIN 53572 und DIN 53517. Des Weiteren hat die Plasmabehandlung einen positiven Effekt auf die Härte des Dichtungsmaterials, das nämlich im Vergleich zu einem gleichen, aber keiner Plasmabehandlung unterworfenen Werkstoff weicher ist, also eine größere Nachgiebigkeit aufweist. So reduzierte sich die Shore 00 - Härte um durchschnittlich 10%. Außerdem erhält man durch die Plasma-Nachbehandlung ein besseres Breiten-HöhenVerhältnis des Silikon-Dichtungsschaums. Im Vergleich zum nicht nachbehandelten Werkstoff verringert sich das Ereiten-Höhenverhältnis von 2/1 auf 1,5-1,8/1.

Die Verfahrgeschwindigkeit des Plasmaaggregats ist variabel und wird abhängig von der Intensität des mittels der Düse erzeugten Plasmas angepasst. Bei dem schematisch dargestellten, bevorzugten Ausführungsbeispiel sind der Mischkopf 11 und der Plasma-Erzeuger 13 an einem gemeinsamen Roboterarm 17 angeschlossenen, der die beiden Aggregate immer so führt, dass die Plasmadüse 14 dieselbe Kontur am Substrat wie der vorlaufende Mischkopf überfährt und somit den zuvor aufgetragenen Materialstrang der gewünschten Plasmabehandlung unterzieht.

## Patentansprüche

1. Verfahren zum Herstellen von Polymerkaschierungen oder strangförmigen Aufträgen an einem Substrat, beispielsweise zur Herstellung von FIPFG-Dichtungen, bei dem ein reaktives, aufschäumendes Polymermaterial auf dem Substrat aufgetragen wird, **dadurch gekennzeichnet, dass** das Polymermaterial (10) unmittelbar nach seinem Auftrag auf dem Substrat (12) einer Corona- oder Plasmabehandlung unterworfen wird.

2. Verfahren nach Anspruch 1, **dadurch gekennzeichnet, dass** das Polymermaterial (10) ein 1- oder 2-komponentiges Polyurethanschaummaterialist.

3. Verfahren nach Anspruch 1, **dadurch gekennzeichnet, dass** das Polymermaterial (10) ein 1- oder 2-komponentiges Silikonschaummaterial ist.

4. Verfahren nach Anspruch 3, **dadurch gekennzeichnet, dass** als Polymermaterial (10)ein 2-komponentiges, nach dem Additionsvernetzungsprinzip vorzugsweise bei Raumtemperatur vernetzendes Silikonschaummaterial verwendet wird.

5. Verfahren nach einem der Ansprüche 1 bis 4, **dadurch gekennzeichnet, dass** das Polymermaterial (10) nach seiner Applikation einer Behandlung mit einem Atmosphären-Plasma-Erzeuger (13) unterworfen wird.

6. Verfahren nach Anspruch 5, **dadurch gekennzeichnet, dass** die Plasmadüse (14) des Plasma-Erzeugers (13) das applizierte Polymermaterial (10) in einem Abstand von 1 bis 10 mm zur Materialoberfläche überstreicht.

7. Verfahren nach Anspruch 6, **dadurch gekennzeichnet, dass** der Abstand 3 bis 6 mm beträgt.

8. Verfahren nach Anspruch 6 oder 7, **dadurch gekennzeichnet, dass** der Abstand etwa 4 mm beträgt.

9. Verfahren nach einem der Ansprüche 5 bis 8, **dadurch gekennzeichnet, dass** die Plasmadüse (14) relativ zum applizierten Polymermaterial (10) mit einer Geschwindigkeit von 0,3 bis 25 m/min, vorzugsweise zwischen 3 und 15 m/min bewegt wird.

10. Vorrichtung zum Herstellen von Polymerkaschierungen oder strangförmigen Aufträgen an einem Substrat, beispielsweise zur Herstellung von FIPFG-Dichtungen (15), mit einer Dosiereinrichtung für das zu applizierende Polymermaterial mit einem relativ zu dem Substrat (12) verfahrbaren Applikator (11), **dadurch gekennzeichnet, dass** die Vorrichtung mindestens einen dem Applikator nachfolgend verfahrbaren Plasma-Erzeuger (13) aufweist.

11. Vorrichtung nach Anspruch 10, **dadurch gekennzeichnet, dass** der Plasma-Erzeuger (13) so relativ zum Applikator (11) angeordnet ist, dass sich seine Plasmadüse (14) oberhalb des vom Applikator zuvor auf dem Substrat aufgetragenen Polymermaterials (10) befindet.

12. Vorrichtung nach Anspruch 10 oder 11, **dadurch gekennzeichnet, dass** der Abstand der Plasmadüse (14) vom Applikator (11) und/oder vom Substrat (12) oder dem darauf aufgetragenen Polymermaterial (10) einstellbar ist.

## Claims

1. Method for producing polymer laminations or applied strips on a substrate, for example for the preparation of FIPFG seals, in which a reactive, foaming polymer material is applied to the substrate, **characterised in that** the polymer material (10) is subjected to a corona or plasma treatment immediately after its application to the substrate (12).

2. Method according to claim 1, **characterised in that** the polymer material (10) is a 1- or 2-component polyurethane foam.

3. Method according to claim 1, **characterised in that** the polymer material (10) is a 1- or 2-component silicone foam.

4. Method according to claim 3, **characterised in that** a 2-component silicone foam material which preferably crosslinks at ambient temperature in accordance with the addition crosslinking principle is used as the polymer material (10).

5. Method according to one of claims 1 to 4, **characterised in that**, after being applied, the polymer material (10) is subjected to a treatment with an atmospheric plasma generator (13).

6. Method according to claim 5, **characterised in that** the plasma nozzle (14) of the plasma generator (13) sweeps over the applied polymer material (10) at a distance of 1 to 10 mm from the surface of the material.

7. Method according to claim 6, **characterised in that** the distance is 3 to 6 mm.

8. Method according to claim 6 or 7, **characterised in that** the distance is about 4 mm.

9. Method according to any one of claims 5 to 8, **characterised in that** the plasma nozzle (14) is moved relative to the applied polymer material (10) at a speed of 0.3 to 25 m/min, preferably between 3 and 15 m/min.

10. Apparatus for the production of polymer laminations or applied strips on a substrate, for example for the preparation of FIPFG seals (15), with a metering device for the polymer that is to be applied having an applicator (11) that can be moved relative to the substrate (12), **characterised in that** the apparatus comprises at least one plasma generator (13) which is movable so as to follow the applicator.

11. Apparatus according to claim 10, **characterised in that** the plasma generator (13) is arranged relative to the applicator (11) so that its plasma nozzle (14) is located above the polymer material (10) which has previously been applied to the substrate by the applicator.

12. Apparatus according to claim 10 or 11, **characterised in that** the distance of the plasma nozzle (14) from the applicator (11) and/or from the substrate (12) or the polymer material (10) applied thereto is adjustable.

## Revendications

1. Procédé de fabrication de placages de polymère ou de couches en forme de boyau sur un substrat, par exemple pour la fabrication de garnitures étanches de FIPFG, dans lequel un matériau polymère réactif moussant est appliqué sur le substrat, **caractérisé en ce que** le matériau polymère (10) est soumis, directement après son application sur le substrat (12), à un traitement corona ou à un traitement au plasma.

2. Procédé selon la revendication 1, **caractérisé en ce que** le matériau polymère (10) est un matériau alvéolaire de polyuréthane à 1 ou 2 composants.

3. Procédé selon la revendication 1, **caractérisé en ce que** le matériau polymère (10) est un matériau alvéolaire de silicone à 1 ou 2 composants.

4. Procédé selon la revendication 3, **caractérisé en ce que** l'on utilise comme matériau polymère (10) un matériau alvéolaire de silicone à 2 composants qui réticule selon le principe de réticulation par addition, de préférence à température ambiante.

5. Procédé selon l'une quelconque des revendications 1 à 4, **caractérisé en ce que** le matériau polymère (10) est soumis, après son application, à un traitement avec un générateur de plasma atmosphérique (13).

6. Procédé selon la revendication 5, **caractérisé en ce que** la buse à plasma (14) du générateur de plasma (13) recouvre le matériau polymère appliqué (10) à une distance de 1 à 10 mm de la surface du matériau.

7. Procédé selon la revendication 6, **caractérisé en ce que** la distance est de 3 à 6 mm.

8. Procédé selon la revendication 6 ou la revendication 7, **caractérisé en ce que** la distance est d'environ 4 mm.

9. Procédé selon l'une quelconque des revendications 5 à 8, **caractérisé en ce que** la buse à plasma (14) est déplacée par rapport au matériau polymère appliqué (10) à une vitesse de 0,3 à 25 m/min, de préférence entre 3 et 15 m/min.

10. Dispositif de fabrication de placages de polymère ou de couches en forme de boyau sur un substrat, par exemple pour la fabrication de garnitures étanches de FIPFG (15), comprenant un dispositif de dosage pour le matériau polymère à appliquer avec un applicateur (11) déplaçable par rapport au substrat (12), **caractérisé en ce que** le dispositif présente au moins un générateur de plasma (13) déplaçable suivant l'applicateur.

11. Dispositif selon la revendication 10, **caractérisé en ce que** le générateur de plasma (13) est aménagé par rapport à l'applicateur (11) de sorte que sa buse à plasma (14) se trouve au-dessus du matériau polymère (10) appliqué préalablement sur le substrat par l'applicateur.

12. Dispositif selon la revendication 10 ou la revendication 11, **caractérisé en ce que** la distance de la buse à plasma (14) à l'applicateur (11) et/ou au substrat (12) ou au matériau polymère (10) appliqué sur celui-ci est réglable.
